# NEW EUROPEAN PATENT SPECIFICATION

(11) **EP 1 771 506 B2**
(45) Date of publication and mention of the opposition decision: **29.10.2014**
(45) Mention of the grant of the patent: 25.08.2010
(21) Application number: 05777254.3
(22) Date of filing: 27.07.2005
(51) Int. Cl.: C08K 5/09, C08L 77/00

(54) **A PROCESS FOR THE PREPARATION OF THERMOPLASTIC POLYAMIDE COMPOSITIONS EXHIBITING INCREASED MELT FLOW AND ARTICLES FORMED THEREFROM**
VERFAHREN ZUR HERSTELLUNG THERMOPLASTISCHER POLYAMIDZUSAMMENSETZUNGEN MIT ERHÖHTEM SCHMELZFLUSS UND DAMIT HERGESTELLTE ARTIKEL
PROCÉDÉ DE FABRICATION DE COMPOSITIONS POLYAMIDES THERMOPLASTIQUES PRÉSENTANT UN ÉCOULEMENT DE FUSION AMÉLIORÉ ET ARTICLES ÉLABORÉS À PARTIR DE CELLES-CI

(30) Priority: 27.07.2004 US 591532 P
(43) Date of publication of application: 11.04.2007
(73) Proprietor: E.I. DU PONT DE NEMOURS AND COMPANY, Wilmington, DE 19898 (US)
(72) Inventor: MARTENS, Marvin, M., Vienna, WV 26105 (US); PAGILAGAN, Rolando, Umali, Parkersburg, WV 26104 (US); FISH, Robert, B., Parkersburg, WV 25104 (US)
(74) Representative: Heinemann, Monica
(86) International application number: PCT/US2005/026687
(87) International publication number: WO 2006/015067

(56) References cited:
- EP-A- 0 308 671
- EP-A1- 0 392 602
- EP-A2- 0 420 093
- EP-A2- 0 469 542
- WO-A1-97/08222
- DE-A1- 1 669 455
- JP-K1- S54 132 654
- US-A1- 2003 018 135
- US-A1- 2003 018 135
- PLASTICS.DUPONT.COM: "Zytel 101 NC010"[Online] 2005, XP002355880 Retrieved from the Internet: URL:http://plastics.dupont.com/plastics/ds heets/zytel/ZYTEL101NC010.pdf?GXHC_gx_sess ion_id_=63fb5bdfdb20fd7e&GXHC_locale=en_US > [retrieved on 2005-11-24]
- H.-G. ELIAS: 'Makromoleküle', vol. 1, part 5 1990, HÜTHIG & WEPF VERLAG, BASEL - HEIDELBERG - NEW YORK page 818
- M.P. STEVENS: 'Polymer Chemistry', 1990, OXFORD UNIVERSITY PRESS, NEW YORK - OXFORD page 435
- 'Sortimentsübersicht (Europa)' ULTRAMID® (PA) 2010, pages 18,22 - 23

## Description

The present invention relates to a process for the preparation of polyamide compositions that exhibit decreased melt flow and similar physical properties when compared to conventional systems. More particularly the present invention relates to such a process in which polyamide is melt-blended with at least one organic acid which is terephthalic acid, and, one or more additional components, wherein the polyamide has a melting point endotherm with an onset temperature of between about 200 °C and about 310°C, wherein the additional components comprise an impact modifier, and wherein the polyamides are as defined in claim 1.

### Background of the Invention

High melt flow (or low melt viscosity, as these terms are used interchangeably) is a very desirable characteristic of a melt-processable polymer resin composition, as it allows for greater ease of use in processes such as injection molding. A composition with higher melt flow or lower melt viscosity can be injection molded with greater ease compared to another resin that does not possess this characteristic. Such a composition has the capability of filling a mold to a much greater extent at lower injection pressures and temperatures and a greater capability to fill intricate mold designs with thin cross-sections. For a linear polymer there is generally a positive correlation between polymer molecular weight and melt viscosity.

It is also often desirable to add additional, often non-miscible, components such as glass reinforcing agents, or rubber impact modifiers to a polymer resin to achieve desired physical properties. However, the presence of such components often leads to an increase in the melt viscosity of the resulting resin. Furthermore, these additional components are typically added using a melt blending process, and will preferably be sufficiently well dispersed in the polymer matrix to obtain optimal physical properties. The dispersal of the components during melt blending will often occur more efficiently when the polymer matrix has a high viscosity. When two or more polymers, such as a polymer matrix and a rubber impact modifier, are blended, optimal dispersion is often obtained when the two or more polymers have similar melt viscosities.

When the matrix polymer is a condensation polymer such as a polyamide, it is often possible to obtain a composition that has both well-dispersed additives and a low melt viscosity by using high molecular weight matrix polymer in conjunction with a molecular-weight reducing additive in the melt blending process. In this method, the matrix polymer will have a sufficiently high melt viscosity to ensure an adequate dispersion of additives and the action of the molecular-weight reducing agent will result in a lower molecular weight matrix polymer. U.S. patent application publication 2003/0018135 discloses the use of aliphatic organic acids in the preparation of impact modified polyamide compositions that have both good melt flow and toughness. However, it has been discovered that the use of aliphatic acids disclosed in this publication can lead to rapid corrosion of the steel elements of the processing equipment used in the melt blending processes.

Thus, a method of a preparing a polyamide composition with improved melt flow that also leads to a reduction in rates of corrosion of processing equipment without having to replace the components of standard melt-processing equipment with those made from costly materials with improved corrosion resistance would be desirable. Such a process would desirably result in decreased levels of corrosion of standard processing equipment in comparison with other processes for increasing melt flow while maintaining the physical properties of thermoplastic polyamide compositions.

### Summary of the Invention

There is disclosed and claimed herein a process for the preparation of a resin composition exhibiting high melt flow, which is melt-blending a thermoplastic polymer which is at least one polyamide with 0.01 to 10 weight percent, based on the total weight of the polyamide, of at least one organic acid, and one or more additional components, wherein the polyamide has a melting point endotherm with an onset temperature of between about 200°C and about 310°C, wherein the organic acid is terephthalic acid, wherein the additional components comprise an impact modifier, and wherein the polyamide is selected from one or more of polyamide 6,6; polyamide 6,10; polyamide 6,12; polyamide 9,T; polyamide 10,T; polyamide 12,T; polyamide 6, T6.6) and polyamide 6,T/D,T).

In addition, articles of manufacture made from compositions according to the claimed process are disclosed and claimed herein.

### Detailed Description of the Invention

A process is provided for the preparation of polyamide compositions that have improved melt flow. The process comprises melt blending polyamide as defined in claim 1 with one or more additional components comprising an impact modifier and with terephthalic acid, wherein the polyamide has a melting point endotherm with an onset temperature of between about 200°C and about 310°C. The process of the present invention leads to reduced rates of corrosion of processing equipment.

The polyamide used in the process of the present invention is at least one thermoplastic polyamide selected from one more of polyamides 6,6; polyamide 6,10; polyamide 6,12; poly(dodecamethylene terephthalamide) (polyamide 12,T), poly(decamethylene terephthalamide) (polyamide 10,T), poly(nonamethylene terephthalamide) (polyamide 9,T), hexamethyleneadipamide-hexamethyleneterephthalamide copolyamide (polyamide 6,T/6,6), hexamethyleneterephthalamide-2-methylpentamethyleneterephthalamide copolyamide (polyamide 6,T/D,T).

By "onset temperature of the melting point endotherm of the polyamide is meant the extrapolated onset temperature of the melting curve of the polyamide (T_{f}) as measured by differential scanning calorimetry (DSC) following ASTM method D3418 - 82 (Reapproved 1988). If the polyamide has two or more melting point endotherms, the onset temperature of the lowest melting point endotherm is selected. If two or more polyamides are used, the onset temperature of the melting point endotherm of the polyamide with the lowest melting point endotherm onset temperature is chosen.

The organic acid used for polyamides with melting point endotherm onset temperatures that are between about 200 °C and about 310 °C is terephthalic acid.

The organic acid is used at about 0.01 to about 10 weight percent, preferably at about 0.05 to about 2 weight percent, or more preferably at about 0.1 to about 1 weight percent, where the weight percentages are based on the total weight of polyamide

The polyamide compositions produced by the process of the present invention contain an impact modifier and may contain further additives. Examples of additives include impact modifiers, fibrous reinforcing agents (such as glass fibers, carbon fibers, wollastonite, aramids etc.), plasticizers, thermal stabilizers, oxidative stabilizers, UV light stabilizers, flame retardants, chemical stabilizers, lubricants, colorants (such as carbon black, other pigments, dyes), mold-release agents, nucleating agents, nanoclays, etc.

The process of the present invention is particularly useful for preparing polyamide compositions that contain reinforcing agents.

Preferred impact modifiers for use with polyamides include carboxyl-substituted polyolefins, which are polyolefins that have carboxylic moieties attached thereto, either on the polyolefin backbone itself or on side chains. By "carboxylic moieties" is meant carboxylic groups such as one or more of dicarboxylic acids, diesters, dicarboxylic monoesters, acid anhydrides, and monocarboxylic acids and esters. Useful impact modifiers include dicarboxyl-substituted polyolefins, which are polyolefins that have dicarboxylic moieties attached thereto, either on the polyolefin backbone itself or on side chains. By 'dicarboxylic moiety' is meant dicarboxylic groups such as one or more of dicarboxylic acids, diesters, dicarboxylic monoesters, and acid anhydrides.

The impact modifier used with polyamides will preferably be based on an ethylene/α-olefin polyolefin. Diene monomers such as 1,4-hexadiene or dicyclopentadiene may optionally be used in the preparation of the polyolefin. Preferred polyolefins are ethylene-propylene-diene (EPDM) polymers made from 1,4-hexadiene and/or dicyclopentadiene. The carboxyl moiety may be introduced during the preparation of the polyolefin by copolymerizing with an unsaturated carboxyl-containing monomer. Preferred is a copolymer of ethylene and maleic anhydride monoethyl ester. The carboxyl moiety may also be introduced by grafting the polyolefin with an unsaturated compound containing a carboxyl moiety, such as an acid, ester, diacid, diester, acid ester, or anhydride. A preferred grafting agent is maleic anhydride. A preferred impact modifier is an EPDM polymer grafted with maleic anhydride, such as Fusabond® N MF521D, which is commercially available from E.I. DuPont de Nemours & Co., Inc., Wilmington, DE. Blends of polyolefins, such as polyethylene, polypropylene, and EPDM polymers with polyolefins that have been grafted with an unsaturated compound containing a carboxyl moiety may be used as an impact modifier.

Impact modifiers suitable for use with polyamides may also include ionomers. By an ionomer is meant a carboxyl group containing polymer that has been neutralized or partially neutralized with metal cations such as zinc, sodium, or lithium and the like. Examples of ionomers are described in US patents 3,264,272 and 4,187,358. Examples of suitable carboxyl group containing polymers include, but are not limited to, ethylene/acrylic acid copolymers and ethylene/methacrylic acid copolymers. The carboxyl group containing polymers may also be derived from one or more additional monomers, such as, but not limited to, butyl acrylate. Zinc salts are preferred neutralizing agents. Ionomers are commercially available under the Surlyn® trademark from E.I. du Pont de Nemours and Co., Wilmington, DE.

It is preferred that a thermoplastic acrylic impact modifier have a core-shell structure. The core-shell structure is one in which the core portion preferably has a glass transition temperature of 0 °C or less, while the shell portion is preferably has a glass transition temperature higher than that of the core portion. The core portion may be grafted with silicone. The shell section may be grafted with a low surface energy substrate such as silicone, fluorine, and the like. An acrylic polymer with a core-shell structure that has low surface energy substrates grafted to the surface will aggregate with itself during or after blending with the polyester and other components of the composition of the invention and can be easily uniformly dispersed in the composition.

In the process of the present invention, the polyamide and organic acid and additional ingredients are melt-blended. All of the components may be dry-blended prior to melt-blending; previously melt-blended mixtures of polyamide with additional additives may be melt-blenddd with the organic acid; previously melt-blended mixtures of polyamide with additional additives may be melt-blended with the organic acid and additional additives.

Melt-blending may be carried out using any appropriate method known to those skilled in the art. Suitable methods may include using a single or twin-screw extruder, blender, kneader, Banbury mixer, molding machine, etc. Twin-screw extrusion is preferred, particularly when the process is used to prepare compositions that contain additives such as impact modifiers,and reinforcing agents.

The compositions made from the process of the present invention have a high melt flow and may be conveniently formed into a variety of articles using injection molding, rotomolding and other melt-processing techniques.

### Examples

### Example 1 and Comparative Example 1

The ingredients shown in Table 1 were dry-blended by tumbling in a drum. Zytel® 101 NC010 is a polyamide 6,6 supplied by E.I. du Pont de Nemours & Co., Wilmington, DE. Fusabond® N MF521 D is an EPDM elastomer grafted with maleic anhydride also supplied by DuPont. The black color concentrate is carbon black dispersed in a polymeric carrier. Equal molar amounts of dodecanedioic acid and terephthalic acid were used.

The mixtures were melt-blended in a ten barrel 30 mm Werner &. Pfleiderer co-rotating twin-screw extruder with a barrel temperature of about 270 °C and a die temperature of about 280 °C. All of the ingredients were fed into the first barrel section. Extrusion was carried out with a port under vacuum. The screw speed was 250 rpm and the extruder feed rate was 30 pounds per hour. The resulting strand was quenched in water, cut into pellets, and sparged with nitrogen until cool. The extruder was run for about 6.5 to about 7 hours a day for 10 days.

Between barrels 3 and 4; 6 and 7; and 9 and 10, the extruder contained 0.25 inch wide steel spacers having a profile matching that of the extruder barrels. (The barrels are numbered sequentially such that barrel 10 is closest to the die.) The diameters of the openings at different points inside the spacers was also measured using a laser micrometer before and after extrusion. Measurements were taken for both the left and right side (relative to the polymer flow direction in the extruder) openings in each barrel. The results of these measurements were converted to a rate of metal loss from the inner surface of the extruder barrels in mils/year (mpy). Measurements at 10 points were made for each spacer for Comparative Example 1 and measurements at eight points were made for each spacer for Example 1 and the range of results is reported in Table 2. Due to experimental error, low rates of metal loss were sometimes calculated to be negative. Negative rates are reported as zero in Table 2. The surfaces of the openings in the spacers were also visually inspected at a 40-50 fold magnification. Visual inspection showed that the spacers used in Example 1 showed significantly less corrosion than those used in Comparative Example 1.

Notched Izod impact strengths and melt viscosities at 280 °C and 1,000 s⁻¹ were measured for the compositions of Comparative Example 1 and Example 1. ISO method ISO 180/1A was used for the notched Izod testing. The results are given in Table 1.

**Table 1**

| | Comparative Ex. 1 | Example 1 |
|---|---|---|
| Zytel® 101 NC010 | 77.57 | 77.75 |
| Fusabond® N MF521 D | 17.05 | 17.05 |
| Black color concentrate | 4.45 | 4.45 |
| Dodecanedioic acid | 0.65 | - |
| Terephthalic acid | - | 0.47 |
| Stabilizers and lubricants | 0.28 | 0.28 |
| | | |
| Notched Izod impact strength (kJ/m²) | 74 | 72 |
| Melt viscosity (Pa·s) | 102 | 102 |

Ingredient quantities are in weight percent relative to the total weight of the composition.

**Table 2**

| | Corrosion rate (mpy) | | | |
|---|---|---|---|---|
| | Comparative Example 1 | | Example 1 | |
| Spacer location | Left side | Right side | Left side | Right side |
| Between barrels 3 and 4 | 379-487 | 183-291 | 0-21 | 0-15 |
| Between barrels 6 and 7 | 9-117 | 0-74 | 0 | 0 |
| Between barrels 9 and 10 | 25-133 | 0-100 | 0-29 | 0-3 |

The polyamide used in Example 1 and Comparative Example 1, polyamide 6,6, has a melting point of about 264 °C. The organic acid used in Comparative Example 1, dodecanedioic acid, has a melting point of about 128-130 °C, more than 135 °C less than that of polyamide 6,6. The use of dodecanedioic acid led to significant corrosion in the extrusion equipment used. The organic acid used in Example 1, terephthalic acid, has a sublimation point of greater than 300 °C, which is more than 30 °C greater than the melting point of polyamide 6,6. The use of terephthalic acid led to minimal corrosion in the extrusion equipment used, while leading to a composition that had an impact strength and melt viscosity that were very similar to those of the composition made in Comparative Example 1.

### Example 2 and Comparative Example 2 (not according to the claimed invention)

All of the ingredients shown in Table 3 with the exception of the brominated flame retardant and glass fibers were dry-blended and fed to the first barrel of a 40 mm Werner & Pfleiderer co-rotating twin-screw extruder with a barrel temperature of about 340-350 °C. The brominated flame retardant and glass fibers were added via a side feeder downstream in the extruder. The resulting strand was quenched in water and cut into pellets.

In Table 3, "polyamide 6,T/6,6" refers to a copolyamide with a melting point of about 312 °C made from terephthalic acid, adipic acid, and hexamethylenediamine. "Lubricants" refers to fatty acid based organic lubricants. "Surlyn® 8920" refers to a neutralized ethylene-methacylic acid copolymer supplied by E.I. du Pont de Nemours & Co. "Glass fibers" refers to PPG 3540, supplied by PPG Industries, Inc. "Brominated flame retardant" refers to PDBS-80, supplied by Great Lakes Chemical, Inc. The black color concentrate is a 30 weight percent loading of carbon black in polyamide 6T/66 supplied by Clarient Corp., Tarrytown, NY.

The melt viscosities of the resulting compositions were determined at 325 °C and 1000 s⁻¹ using a Kayeness rheometer and the results are shown in Table 3. Tensile strength and elongation at break were determined using ISO method 527-1/-2, flexural modulus was determined using ISO 178, and notched Charpy impact strength was determined using ISO method 179 1 eA. The results are shown in Table 3.

**Table 3**

| | Example 3 | Comp. Ex. 3 |
|---|---|---|
| Polyamide 6,T/6,6 | 39.68 | 39.88 |
| Zinc borate | 4 | 4 |
| Lubricants | 0.45 | 0.45 |
| Surlyn® 8920 | 1 | 1 |
| Terephthalic acid | 0.2 | |
| Black color concentrate | 0.67 | 0.67 |
| Brominated flame retardant | 24 | 24 |
| Glass fibers | 30 | 30 |
| | | |
| Melt viscosity (Pa·s) | 65.8 | 78.2 |
| Tensile strength (MPa) | 173 | 173 |
| Elongation at break (%) | 2.0 | 2.0 |
| Flexural modulus (MPa) | 10637 | 10869 |
| Notched Charpy impact strength (kJ/m²) | 10.1 | 11.2 |

Ingredient quantities are in weight percent relative to the total weight of the composition.

### Examples 3-5 and Comparative Example 3 (not according to the claimed invention)

All of the ingredients shown in Table 4 with the exception of the glass fibers were dry-blended and fed to the first barrel of a 58 mm Werner & Pfleiderer co-rotating twin-screw extruder with barrel temperatures of up about 280 °C. The glass fibers were added via a side feeder downstream in the extruder. The resulting strand was quenched in water and cut into pellets.

In Table 4, "polyamide 6,6" refers to Zytel® 101 NC010 supplied by E.I. du Pont de Nemours & Co. "Glass fibers" refers to PPG 3540, supplied by PPG Industries, Inc. "Black color concentrate" refers to a black colorant in polyamide 6,6.

The melt viscosities of the resulting compositions were determined at 280 °C and 1000 s⁻¹ using a Kayeness rheometer and the results are shown in Table 4. Tensile strength and elongation at break were determined using ISO method 527-1/-2, flexural modulus was determined using ISO 178, and notched Charpy impact strength was determined using ISO method 179 1eA. The results are shown in Table 5.

**Table 4**

| | Ex. 3 | Ex.4 | Ex. 5 | Comp. Ex. 2 |
|---|---|---|---|---|
| Polyamide 6,6 | 65.38 | 65.18 | 64.98 | 65.68 |
| Glass fibers | 33 | 33 | 33 | 33 |
| Heat stabilizer and lubricants | 0.32 | 0.32 | 0.32 | 0.32 |
| Black color concentrate | 1 | 1 | 1 | 1 |
| Terephthalic acid | 0.3 | 0.5 | 0.7 | - |
| | | | | |
| Melt viscosity (Pa·s) | 130 | 101 | 79 | 216 |
| Tensile strength (MPa) | 208 | 206 | 202 | 203 |
| Elongation at break (%) | 3.0 | 2.8 | 2.6 | 3.3 |
| Flexural modulus (MPa) | 9524 | 9693 | 9702 | 9048 |
| Notched Charpy impact strength (kJ/m²) | 12.9 | 13.0 | 13.0 | 12.3 |

Ingredient quantities are in weight percent relative to the total weight of the composition.

### Example 6 (not according to the invention)

The ingredients shown in Table 5 were dry-blended by tumbling in a drum. Elvamide® 8061 is a copolyamide 6,6/6 supplied by DuPont Its melting point is 156 °C and the onset temperature of its melting point endotherm is 129 °C

The mixtures were melt-blended in a ten barrel 30 mm Werner & Pfleiderer co-rotating twin-screw extruder with a barrel temperature of about 240 °C and a die temperature of about 250 °C. All of the ingredients were fed into the first barrel section. Extrusion was carried out with a port under vacuum. The screw speed was 250 rpm and the extruder feed rate was 30 pounds per hour. The resulting strand was quenched in water, cut into pellets, and sparged with nitrogen until cool. The extruder was run for about 6.5 to about 7 hours a day for 10 days.

Between barrels 3 and 4; 6 and 7; and 9 and 10, the extruder contained 0.25 inch wide steel spacers having a profile matching that of the extruder barrels. (The barrels are numbered sequentially such that barrel 10 is closest to the die.) An additional 0.25 inch wide spacer of Inconel® 625 was placed between the steel spacer and barrel 4. The diameters of the openings at different points inside the spacers was also measured using a laser micrometer before and after extrusion. Measurements were taken for both the left and right side (relative to the polymer flow direction in the extruder) openings in each barrel. The results of these measurements were converted to a rate of metal loss from the inner surface of the extruder barrels in mils/year (mpy). Measurements at 10 points were made for each spacer for Example 6 and the range of results is reported in Table 6. Due to experimental error, low rates of metal loss were sometimes calculated to be negative. Negative rates are reported as zero in Table 6. The surfaces of the openings in the spacers were also visually inspected at a 40-50 fold magnification. Visual inspection showed that the spacers used in Example 6 showed minimal corrosion and significantly less corrosion than those used in Comparative Example 1.

Notched Izod impact strengths and melt viscosities at 280 °C and 1,000 s⁻¹ were measured for the compositions of Comparative Example 1 and Example 1. ISO method ISO 180/1A was used for the notched Izod testing. The results are given in Table 5.

**Table 5**

| | Example 6 |
|---|---|
| Elvamide® | 77.57% |
| Fusabond® N MF521D | 17.05% |
| Black color concentrate | 4.45% |
| Dodecanedioic acid | 0.65% |
| Stabilizers and lubricants | 0.28% |
| | |
| Notched Izod impact strength (kJ/m²) | 78.9 |
| Melt viscosity (Pa·s) | 84 |

Ingredient quantities are in weight percent relative to the total weight of the composition.

**Table 6**

| | Corrosion rate (mpy) | |
|---|---|---|
| | Example 6 | |
| Spacer location | Left Side | Right side |
| Between barrels 3 and 4 (steel spacer) | 0-109 | 0-174 |
| Between barrels 3 and 4 (Inconel® spacer) | 0-107 | 0-125 |
| Between barrels 6 and 7 | 0-117 | 0-146 |
| Between barrels 9 and 10 | 0-86 | 0-114 |

## Claims

1. A process for the preparation of a resin composition exhibiting high melt flow, comprising melt-blending a thermoplastic polymer which is at least one polyamide with 0.01 to 10 weight percent, based on the total weight of the polyamide, of at least one organic acid, and one or more additional components, wherein the polyamide has a melting point endotherm with an onset temperature of between about 200 °C and about 310 °C, wherein the organic acid is terephthalic acid, and wherein the additional components comprise an impact modifier, wherein the polyamide is selected from one or more of; polyamide 6,6; polyamide 6,10; polyamide 6,12; polyamide 9,T; polyamide 10,T; polyamide 12,T; polyamide 6,T/6.6; and polyamide 6,T/D,T.

2. The process of claim 1 wherein about 0.05 to about 2 weight percent, based on the total weight of polyamide, of at least one organic acid is used.

3. The process of claim 1 wherein about 0.1 to about 1 weight percent, based on the total weight of polyamide, of at least one organic acid, is used.

4. The process of claim 1 wherein the impact modifier comprises an EPDM polyolefin grafted with maleic anhydride.

5. The process of claim 1 wherein the thermoplastic polymer is at least one polyamide and the additional ingredients comprise at least one reinforcing agent.

6. The process of claim 5 wherein the reinforcing agent is glass fibers.

7. An article of manufacture made from compositions according to the process of claim 1.

## Patentansprüche

1. Verfahren zur Herstellung einer Harzzusammensetzung, die einen hohen Schmelzfluss aufweist, umfassend das Schmelzmischen eines thermoplastischen Polymers, das mindestens ein Polyamid mit 0,01 bis 10 Gewichtsprozent, auf das Gesamtgewicht des Polyamids bezogen, mindestens einer organischen Säure ist, und einer oder mehrerer zusätzlicher Komponenten, wobei das Polyamid ein Schmelzpunktendotherm mit einer Einsetztemperatur zwischen etwa 200 °C und etwa 310 °C aufweist, und wobei die organische Säure Terephthalsäure ist und wobei die zusätzlichen Komponenten einen Schlagzähigkeitsverbesserer aufweisen, wobei das Polyamid aus einem oder unter mehreren von Polyamid 6,6; Polyamid 6,10; Polyamid 6,12; Polyamid 9, T; Polyamid 10, T; Polyamid 12, T; Polyamid 6, T/6,6; und Polyamid 6, T/D, T ausgewählt wird.

2. Verfahren nach Anspruch 1, wobei etwa 0,05 bis etwa 2 Gewichtsprozent, auf das Gesamtgewicht des Polyamids bezogen, mindestens einer organischen Säure verwendet werden.

3. Verfahren nach Anspruch 1, wobei etwa 0,1 bis etwa 1 Gewichtsprozent, auf das Gesamtgewicht des Polyamids bezogen, mindestens einer organischen Säure verwendet werden.

4. Verfahren nach Anspruch 1, wobei der Schlagzähigkeitsverbesserer ein EPDM-Polyolefin umfasst, das mit Maleinsäureanhydrid gepfropft ist.

5. Verfahren nach Anspruch 1, wobei das thermoplastische Polymer mindestens ein Polyamid ist und die zusätzlichen Bestandteile mindestens ein Verstärkungsmittel umfassen.

6. Verfahren nach Anspruch 5, wobei das Verstärkungsmittel Glasfasern ist.

7. Gefertigter Gegenstand, der aus Zusammensetzungen dem Verfahren nach Anspruch 1 entsprechend hergestellt ist.

## Revendications

1. Procédé de préparation d'une composition de résine faisant preuve d'un indice élevé de fluidité à chaud, comprenant le mélange à l'état fondu d'un polymère thermoplastique qui est au moins un polyamide avec 0,01 à 10 pour cent en poids, basé sur le poids total du polyamide, d'au moins un acide organique, et d'un ou plusieurs composant(s) supplémentaire(s), dans lequel le polyamide a un endotherme de fusion avec une température de départ comprise entre environ 200°C et environ 310°C, dans lequel l'acide organique est l'acide téréphtalique et dans lequel les composants supplémentaires comprennent un agent de modification de la résistance aux chocs, dans lequel le polyamide est choisi parmi un ou plusieurs d'entre le polyamide 6,6; polyamide 6,10; polyamide 6,12; polyamide 9,T; polyamide 10,T; polyamide 12,T; polyamide 6,T/6,6; et polyamide 6,T/D,T.

2. Procédé selon la revendication 1, dans lequel environ 0,05 à environ 2 pour cent en poids, basé sur le poids total du polyamide, d'au moins un acide organique sont utilisés.

3. Procédé selon la revendication 1, dans lequel environ 0,1 à environ 1 pour cent en poids, basé sur le poids total du polyamide, d'au moins un acide organique est utilisé.

4. Procédé selon la revendication 1, dans lequel l'agent de modification de la résistance aux chocs comprend une polyoléfine d'EPDM greffée avec de l'anhydride maléique.

5. Procédé selon la revendication 1, dans lequel le polymère thermoplastique est au moins un polyamide et les ingrédients supplémentaires comprennent au moins un agent de renfort.

6. Procédé selon la revendication 5, dans lequel l'agent de renfort est des fibres de verre.

7. Article de manufacture fabriqué à partir de compositions selon le procédé selon la revendication 1.
